# EUROPEAN PATENT APPLICATION

(11) **EP 2 983 045 A1**
(43) Date of publication of application: **10.02.2016**
(21) Application number: 15180080.2
(22) Date of filing: 06.08.2015
(51) Int. Cl.: G03G 15/00

(54) **ELECTRONIC SYSTEM AND CONTROL METHOD OF ELECTRONIC SYSTEM**

(30) Priority: 07.08.2014 JP 2014161650
(71) Applicant: Seiko Epson Corporation, Shinjuku-ku Tokyo (JP)
(72) Inventor: TSUKUI, Shinobu, Suwa-shi, Nagano 392-8502 (JP); YOSHIDA, Katsuichi, Suwa-shi, Nagano 392-8502 (JP)
(74) Representative: Miller Sturt Kenyon

(57) **Abstract**

An electronic system in which a control unit causes the system to be started up after being shifted to a power off state once, when being shifted from a normal state to a power saving state, and causes the system to shift to the power saving state at a time of startup when determining that the system is shifting to the power saving state.

## Description

### BACKGROUND

### 1. Technical Field

The present invention relates to an electronic system and a control method of the electronic system.

### 2. Related Art

An electronic apparatus which can shift to a power saving mode (which is also referred to as sleep mode, standby mode, or the like) for saving power, as an operation state, has been known (for example, refer to JP-A-2014-124809).

For a structure which can shift to a power saving mode, there has been room for improving from a viewpoint of promoting power saving, improving convenience for a user, improving stability of an operation of a product, or the like.

### SUMMARY

An advantage of some aspects of the invention is to provide an electronic system in which an improvement of a structure for shifting to a power saving mode has been made, and a control method of the electronic system.

According to an aspect of the invention, there is provided an electronic system which has a normal mode, and a power saving mode in which power consumption is smaller than that of the normal mode as operation states, the electronic system including a control unit, and a storage unit, in which, when shifting from the normal mode to the power saving mode, the control unit starts up the electronic system after turning off power of the electronic system, after causing the storage unit to store power saving information which denotes shifting to the power saving mode, the control unit determines whether or not the power saving information is stored in the storage unit when starting up the electronic system, causes the electronic system to shift to the power saving mode by starting up the electronic system when it is a first case in which the power saving information is stored in the storage unit, and causes the electronic system to shift to the normal mode by starting up the electronic system when it is a second case in which the power saving information is not stored in the storage unit.

According to the configuration, when shifting from the normal mode to the power saving mode, the electronic system is restarted after being turned off once, and then shifts to the power saving mode. For this reason, it is possible to improve stability of the electronic system. In addition, on the premise that the electronic system is caused to shift from the normal mode to the power saving mode, according to the invention, when the electronic system is stopped due to a power failure, it is possible to restore the electronic system in a state of the power saving mode when restoring (starting up) the electronic system.

The electronic system may further include a display unit for displaying information related to the electronic system, in which, in the power saving mode, a state of the display unit may be the same as a power off state of the electronic system.

According to the configuration, when the electronic system is in the power saving mode, it is possible to cause a user to consider that power of the electronic system is turned off. In addition, since the electronic system is actually started up (started up in power saving mode) when it looks as if the electronic system is in the power off state, it is possible for the electronic system to instantly return to the normal mode according to an operation instruction from the outside. In addition, in the power saving mode, it is possible to enhance a power saving effect compared to a power saving mode in the related art, by making a state of the display unit the same as that of the electronic system when power of the electronic system is turned off.

In the electronic system, when setting in which shifting from the normal mode to the power saving mode is not allowed is performed, or when setting in which shifting from the normal mode to the power saving mode is allowed is performed, and a predetermined error occurs in the electronic system, the control unit may not cause the electronic system to start up after turning off power of the electronic system.

According to the configuration, when a predetermined error is found in a process of turning off power of the electronic system, an automatic restarting thereafter is prevented, and accordingly, it is possible to secure stability.

In the electronic system, the control unit may shift to an error notifying mode for notifying an error which is different from either the normal mode or the power saving mode by starting up the electronic system at a time of starting up the electronic system, when the power saving information is stored in the storage unit, and the predetermined error occurs in the electronic system.

According to the configuration, when a predetermined error is found in the process of starting up the electronic system, it is possible to reliably inform a user of a presence of the error by shifting to the error notifying mode, not the power saving mode.

Technical ideas of the invention are not realized only by an invention of an electronic system. For example, it is possible to understand a shifting process of a mode which is executed by the electronic system as an invention of a method (control method of electronic system). In addition, the invention may be executed in various categories such as a computer program in which such a process is executed in hardware (computer on which electronic system is mounted), and a computer-readable storage medium in which the program is stored.

### BRIEF DESCRIPTION OF THE DRAWINGS

Embodiments of the invention will now be described by way of example only with reference to the accompanying drawings, wherein like numbers reference like elements.
Fig. 1 is a block diagram which exemplifies a function of an electronic apparatus, or the like, according to an embodiment.
Fig. 2 is a flowchart which illustrates a process which is executed by the electronic apparatus, including a process of shifting from a normal mode to a power saving mode.
Fig. 3 is a flowchart which illustrates a part of the processes which are illustrated in Fig. 2 in detail.

### DESCRIPTION OF EXEMPLARY EMBODIMENTS

Hereinafter, embodiments of the invention will be described with reference to drawings.

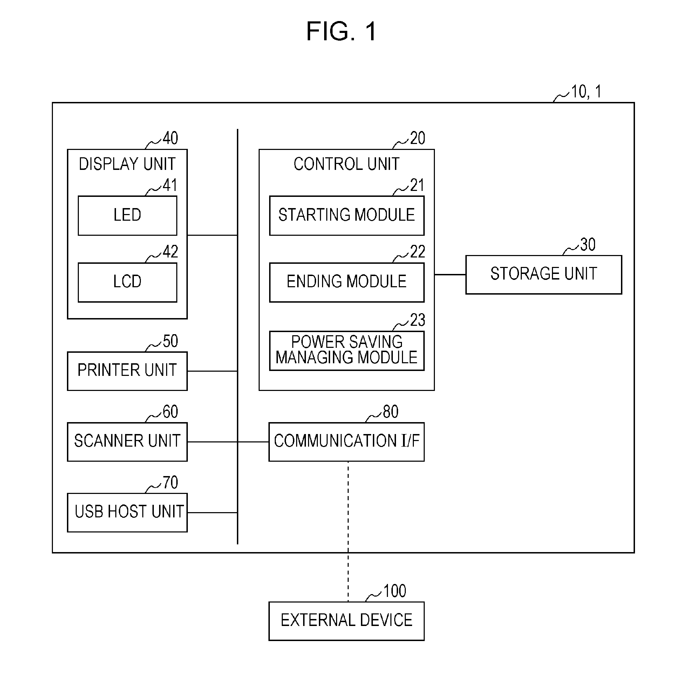

Fig. 1 exemplifies a function of an electronic apparatus 10, or the like, according to the embodiment using a block diagram. The electronic apparatus 10 is a product for realizing an electronic system 1 according to the embodiment of the invention. However, each configuration as the electronic apparatus 10 which is illustrated in Fig. 1 is not limited to a case in which the configurations are integrated in one portion or one housing, and one system may be constructed by setting a state in which each of configurations is present at places which are separated from each other, and can communicate with each other.

The electronic apparatus 10 is a product such as a printer, a scanner, and a fax machine, for example. Alternatively, the electronic apparatus 10 may be a multifunction printer in which a plurality of products such as a printer, a scanner, and a fax machine are combined. However, the electronic apparatus 10 is not limited to these products, and may correspond to all of products, when it is an electronic apparatus which includes a normal mode, and a power saving mode in which power consumption is smaller than that of the normal mode as operation states of a system.

In Fig. 1, the electronic apparatus 10 is illustrated as a multifunction printer which includes a control unit 20, a storage unit 30, a display unit 40, a printer unit 50, a scanner unit 60, a USB host unit 70, a communication interface (I/F) 80, and the like. The control unit 20 is realized by an IC which includes a CPU, a ROM, a RAM, and the like, for example. In the control unit 20, various functions (for example, a starting module 21, an ending module 22, and a power saving managing module 23) are executed when the CPU executes arithmetic processing corresponding to a program which is stored in the ROM using the RAM as a work area. The storage unit 30 is realized by a non-volatile semiconductor memory such as a flash memory, or an EEPROM, for example.

The display unit 40 is a portion for displaying various information related to the electronic apparatus 10 (electronic system 1), and includes an LED 41, or a liquid crystal display (LCD) 42. The LED 41 displays a state of the electronic apparatus 10 at the point of time on the outside using a light emitting state (lighting, blinking, lights-out, or a luminous color). The LCD 42 also functions as an operation reception unit (a part thereof) for receiving an operation from a user by also functioning as a so-called touch panel. That is, the LCD 42 displays various pieces of information related to the electronic apparatus 10 using characters or CG, or receives the operation.

The printer unit 50 is a mechanism for performing printing based on printing data with respect to a printing medium. A printing type which the printer unit 50 adopts is various, for example, an ink jet type, a laser type, and the like. The scanner unit 60 is a mechanism for optically reading (scanning) a manuscript, and is configured of a light source, a manuscript stand, an imaging element, and the like. The USB host unit 70 is an interface for connecting an external USB device (USB memory, or the like), and functions as a host for controlling the USB device.

The communication I/F 80 is a general term for an interface for connecting the electronic apparatus 10 to an external device 100 in a wired manner or a wireless manner. The external device 100 corresponds to all devices which can control the electronic apparatus 10 from the outside such as a personal computer (PC), a smart phone, a tablet terminal, and a digital still camera, for example. The electronic apparatus 10 can be connected to the external device 100 through the communication I/F 80 using various means or communication standards such as a USB cable, a wired network, a wireless LAN, a facsimile communication network, and email, for example.

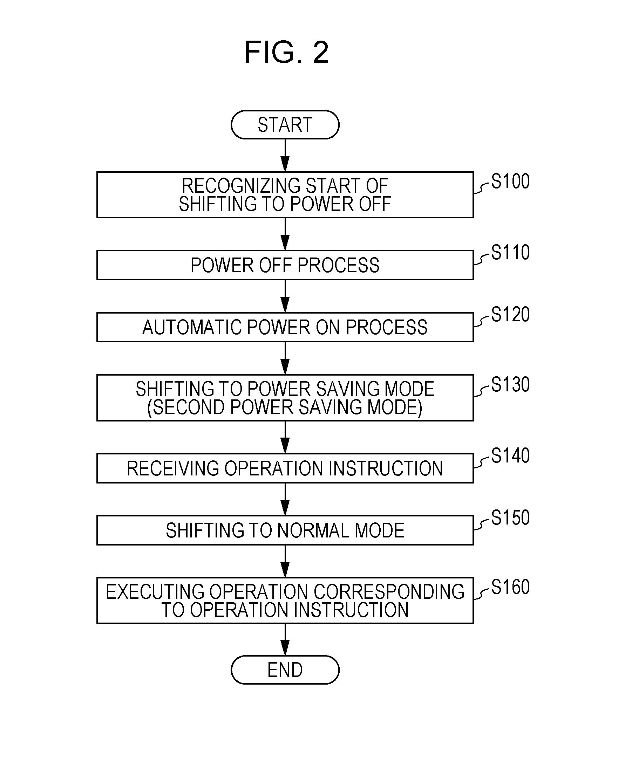

Fig. 2 is a flowchart which illustrates a process which is executed by the electronic apparatus 10 including a process in which the electronic apparatus 10 shifts from a normal mode to a power saving mode. At least a part of the flowchart illustrates a control method of the electronic system.

As a first premise of the flowchart, it is assumed that the electronic apparatus 10 is working in the normal mode. The normal mode is a state in which a necessary power source is supplied to each unit of the electronic apparatus 10, and all of functions of the electronic apparatus 10 work normally.

In addition, as a second premise of the flowchart, it is assumed that setting of permitting the electronic apparatus 10 to shift to a power saving mode (setting of power saving mode) is validated.

Validation or invalidation of the setting of the power saving mode can be performed with respect to the electronic apparatus 10 by a user through the operation reception unit. Alternatively, it is possible for the user to perform the validation or invalidation of the setting of the power saving mode with respect to the electronic apparatus 10 by operating the external device 100. The control unit 20 causes the storage unit 30 to store information on whether such setting of the power saving mode is valid or invalid. As will be described later, according to the embodiment, at least a "first power saving mode", and a "second power saving mode" in which power consumption is smaller than that of the first power saving mode are included in the power saving mode; however, it is assumed that the setting of the power saving mode is setting in which shifting to the second power saving mode is permitted.

In step S100, the control unit 20 recognizes that shifting to the power off state has been started. Specifically, the control unit 20 recognizes the start of shifting to power off when detecting pressing of a "power button" (not illustrated) which is provided in the electronic apparatus 10. In addition, the control unit 20 recognizes the start of shifting to the power off state according to a predetermined automatic power off program. The automatic power off program is a program in which power of the electronic apparatus 10 is automatically turned off after a predetermined time, after all instructions or operations from the outside with respect to the electronic apparatus 10 are not performed. The control unit 20 also recognizes the start of shifting to the power off state when it is determined that the predetermined time has passed after all the instructions or operations from the outside with respect to the electronic apparatus 10 are not performed according to the automatic power off program.

Subsequently, in step S110, the control unit 20 executes a "power off process" for turning off the electronic apparatus 10 according to a predetermined ending sequence.

Subsequently, in step S120, the control unit 20 executes an "automatic power on process" for automatically restarting the electronic apparatus 10 which is turned off, according to a predetermined starting sequence.

Subsequently, in step S130, the control unit 20 causes the restarted electronic apparatus 10 to shift to the power saving mode (second power saving mode).

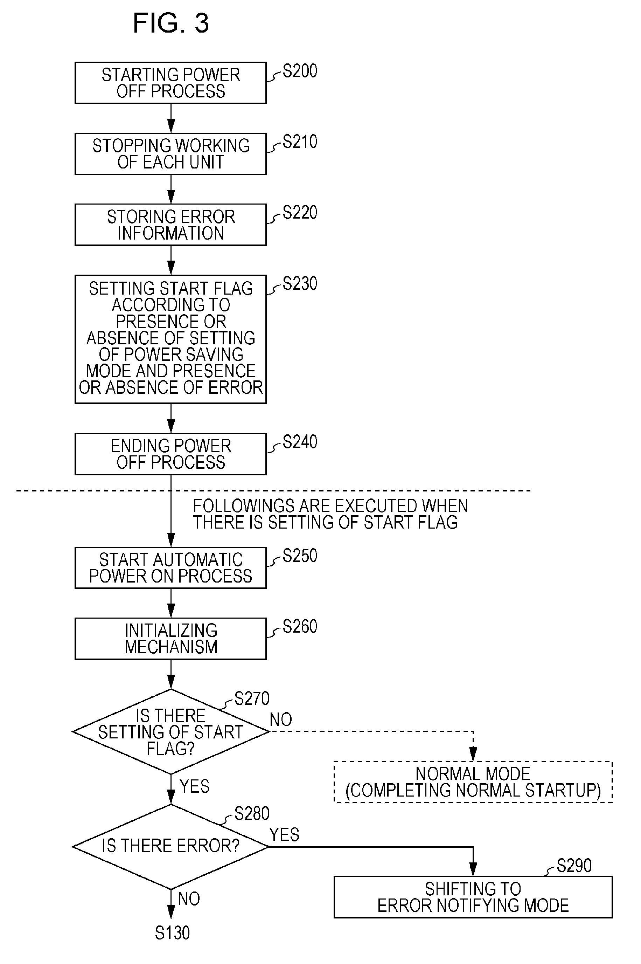

Fig. 3 is a flowchart in which the above described "power off process" and the "automatic power on process" are illustrated in detail. Schematically, steps S200 to S240 in Fig. 3 correspond to the power off process, and steps S250 to S290 correspond to the automatic power on process. Specifically, when the power off process is started (step S200) the ending module 22 stops a power supply to each unit which configures the electronic apparatus 10 such as the display unit 40, the printer unit 50, the scanner unit 60, the USB host unit 70, and the communication I/F 80, and stops each of the units (step S210) from working according to a predetermined ending sequence.

The ending module 22 determines whether or not a predetermined error occurs in the electronic apparatus 10 in the process of executing step S210. In addition, when a predetermined error occurs, the ending module temporarily stores information of the error (step S220). The predetermined error which is referred to here corresponds to a failure in mechanical system (mechanical error) such as the printer unit 50, or the scanner unit 60, or an error such as when there is a so-called paper jam or when the printer is out of ink.

The ending module 22 sets a start flag according to a presence or absence of setting of the power saving mode, and a presence or absence of the error (step S230). Specifically, when information denoting that the setting of the power saving mode is valid is stored in the storage unit 30, and information on the error is not stored in step S220, the start flag is set (start flag is caused to be stored in storage unit 30). The ending module 22 ends the power off process after passing through the steps S210 to S230, and after stopping a power supply to the storage unit 30 (step S240). In this manner, the electronic apparatus 10 enters the power off state.

The electronic apparatus 10 maintains the power off state when being turned off without setting the start flag. In this case, the turned off electronic apparatus 10 is not started as long as a "power button" is not pressed. A state in which the electronic apparatus is started from the power off state when the power button is pressed is referred to as a "normal start". In other words, when the setting of the power saving mode is invalidated (when setting in which shifting from normal mode to power saving mode is not allowed is performed), the automatic power on process is not executed. In addition, even when the setting of the power saving mode is validated, when a predetermined error is found in a process of the power off processing, the automatic power on process is not executed in order to prevent a repeated error from occurring at a time of the automatic restarting thereafter.

When the power is turned off after setting the start flag, the electronic apparatus 10 executes the automatic power on process thereafter. Specifically, the starting module 21 recognizes that it is time to restart the electronic apparatus 10 after the power of the electronic apparatus 10 is turned off, after a point in time in which the setting of the start flag (step S230) using the ending module 22 is performed, and actually starts the automatic power on process after ending of the power off process (step S250). After starting the automatic power on process (step S250), the starting module 21 restarts a power supply to each unit which configures the electronic apparatus 10 such as the storage unit 30, the display unit 40, the printer unit 50, the scanner unit 60, the USB host unit 70, and the communication I/F 80 according to a predetermined starting sequence, and initializes mechanisms such as the printer unit 50 or the scanner unit 60 (step S260). In addition, the starting module 21 determines whether or not a predetermined error which is described above occurred in the electronic apparatus 10 even in the process of performing initialization in step S260. A case in which the occurrence of an error is not found in the process of the power off processing, and the occurrence of the error is found in the initialization process in the middle of the automatic power on processing thereafter is a rare case; however, the possibility is not zero.

In addition, the starting module 21 determines whether or not the start flag is set (whether or not start flag is stored in storage unit 30) (step S270). This is for the starting module 21 to recognize whether or not the current process is the "normal start". That is, the starting module 21 recognizes whether or not the current process is the normal start according to a presence or absence of the start flag when being started once, since the initialization is performed in the common sequence to step S260, even when being started due to pressing of the power button. If the start flag is not stored in the storage unit 30, the starting module 21 causes the electronic apparatus 10 to shift to the normal mode after ending of the initialization since it is not a case of the automatic power on process after the power off process, and is a case in which the normal start is to be performed. In this manner, the normal start of the electronic apparatus 10 is completed.

Hereinafter, descriptions will be continued by assuming that the starting module 21 determines that the start flag is set in step S270 (start flag is stored in storage unit 30).

In the starting module 21, the process proceeds to step S290 when an occurrence of a predetermined error is recognized in the process of performing the initialization in step S260 ("Yes" in step S280). On the other hand, when the occurrence of the error is not recognized in the process of performing the initialization ("No" in step S280), the flowchart in Fig. 3 ends, and the process proceeds to step S130 (Fig. 2).

In step S290, the starting module 21 causes the electronic apparatus 10 to shift to an error notification mode for notifying an error which is different from either the normal mode or the power saving mode. That is, the electronic apparatus 10 enters the error notification mode by being started. In the error notification mode, the control unit 20 controls the display unit 40, and informs a user of the occurrence of an error using a light emitting state of the LED 41 or display contents of the LCD 42.

In step S130 (Fig. 2), the power saving managing module 23 causes a state of the electronic apparatus 10 which is restarted after ending initialization using the automatic power on process to shift to the first power saving mode, and causes the state to shift to the second power saving mode from the first power saving mode. Here, shifting to the first power saving mode is the same as a shifting process from the normal mode to a standby mode (sleep mode) in the related art, and the power saving managing module 23 stops a power supply to each unit such as the printer unit 50, the scanner unit 60, and the USB host unit 70, stops each of the units from working, turns off the LCD 42, and turns off a part of the LED 41.

In addition, in the shifting process from the first power saving mode to the second power saving mode, the power saving managing module 23 turns off the LED 41 which is not turned off in the first power saving mode (for example, power LED which denotes that power of electronic apparatus 10 is turned on, access LED which denotes that external USB device is connected to USB host unit 70, and the like). In addition, in the shifting process from the first power saving mode to the second power saving mode, the power saving managing module 23 also stops a power supply to various sensors which are included in the electronic apparatus 10. The sensor which is referred to here is, for example, a sensor for detecting attaching and detaching of a sheet feeding cassette (sheet feeding tray), a sensor for detecting a manuscript which is included in the scanner unit 60, a sensor of a touch panel, a sensor which detects inserting of a storage medium such as a memory card from the outside, and the like.

An appearance (state of display unit 40) of the electronic apparatus 10 which shifts to the second power saving mode in this manner is in the exact same state as that when power of the electronic apparatus is turned off. That is, the electronic apparatus 10 which shifts to the second power saving mode looks as if the apparatus is in the power-off state for a user. In addition, it is possible to further promote power saving compared to the case in which the electronic apparatus is set to the first power saving mode, by setting the electronic apparatus 10 to the second power saving mode.

The electronic apparatus 10 waits for an operation instruction from the outside after shifting to the second power saving mode. The operation instruction which is referred to here is an instruction on executing printing which is accompanied by transmitting of printing data from the external device 100, an instruction on executing scanning from the external device 100, or the like. That is, when detecting that such an operation instruction is received through the communication I/F 80 (step S140), the power saving managing module 23 causes the state of the electronic apparatus 10 to shift from the second power saving mode to the first power saving mode, and causes the state to shift from the first power saving mode to the normal mode according to a predetermined restoring sequence (step S150). In addition, the control unit 20 executes an operation (printing or scanning) corresponding to the operation instruction which is received in step S140 in the state of being shifted (restored) to the normal mode in this manner (step S160).

According to the embodiment, the electronic system is a system which has the normal mode, and the power saving mode in which power consumption is smaller than that of the normal mode as the operation states, includes the control unit 20 and the storage unit 30, and in which, when shifting from the normal mode to the power saving mode, the control unit 20 causes the electronic system to be started (step S120) after turning off power of the electronic system (step S110), after causing the storage unit 30 to store power saving information which denotes shifting to the power saving mode, determines whether or not the power saving information is stored in the storage unit 30 (step S270) when starting the electronic system (step S120, or when causing electronic system to perform normal start), causes the electronic system to shift to the power saving mode by starting the electronic system (step S130) in the first case in which the power saving information is stored in the storage unit 30, and causes the electronic system to be shifted to the normal mode (causes electronic system to perform normal start) by starting the electronic system in the second case in which the power saving information is not stored in the storage unit 30. The start flag which is stored in the storage unit 30 corresponds to an example of the power saving information. In addition, the first case in which the power saving information is stored in the storage unit 30 does not mean all of cases in which the power saving information is stored in the storage unit 30. For example, a case in which the power saving information is stored in the storage unit 30 ("Yes" in step S270) however, an occurrence of error is recognized in the process of initialization ("Yes" in step S280), and does not correspond to the first case. Similarly, the second case in which the power saving information is not stored in the storage unit 30 is an example of a case in which the power saving information is not stored in the storage unit 30.

According to the embodiment, it is possible to provide one useful configuration with respect to a structure in which the electronic system shifts from the normal mode to the power saving mode. In particular, it is possible to obtain some advantages by inserting a process in which power of the electronic apparatus 10 is turned off once, and then the electronic apparatus 10 is restarted, as described above, when shifting from the normal mode to the second power saving mode. First, there is an advantage that it is possible to make the process the same as that of a case in which the electronic apparatus 10 which is stopped due to a power failure is restored (started up) by restarting the electronic apparatus. For this reason, as a result, it is possible to cause the electronic apparatus 10 to shift to the second power saving mode in any one of a case in which power of the electronic apparatus 10 is turned off due to pressing of the power button by a user, a case in which power of the electronic apparatus 10 is automatically turned off according to the automatic power off program, and a case in which the electronic apparatus 10 which is stopped due to a power failure is restored. In addition, a process in a case in which the electronic apparatus 10 which is stopped due to a power failure is restored will be described later. In addition, secondly, there is an advantage that fragmentation in the memory (RAM) which is included in the control unit 20 is resolved, and the operation of the electronic apparatus 10 is stabilized when power of the electronic apparatus 10 is turned off once. Thirdly, there is an advantage that it is possible to use an existing sequence for turning off power of the electronic apparatus 10, and a little effort which is necessary for a development of products is needed, compared to a case in which a new sequence for directly shifting from the normal mode to the second power saving mode is provided.

In addition, according to the embodiment, when the electronic apparatus 10 is in the power saving mode (second power saving mode), it is possible to show a user the electronic apparatus as if power of the electronic apparatus 10 is turned off, and to save more power compared to the power saving mode in the related art (first power saving mode). In addition, since the electronic apparatus 10 in the second power saving mode is actually started up using minimum power consumption even if it looks the same as the case of power off, it is not necessary for a user to start up the electronic apparatus 10 from the state (without being requested to press power button), and the user can rapidly use the electronic apparatus 10 by only transmitting printing data to the electronic apparatus 10 from the external device 100.

In addition, since it is possible to show the electronic apparatus 10 as if power of the electronic apparatus is turned off using the second power saving mode as in the embodiment, it is possible to reduce a situation in which power of the electronic apparatus 10 is turned off by a first user, for example, and to improve convenience for a second user who wants to maintain a state in which the electronic apparatus 10 can be instantly used.

In addition, as described above, the embodiment can be applied to a situation in which the electronic apparatus 10 which is stopped due to a power failure is restored. When the electronic apparatus 10 is suddenly stopped due to a power failure, a user reinserts a plug of a power code of the electronic apparatus 10 into an outlet, after pulling out the plug once from the commercial outlet for supplying AC power. At this time, according to the embodiment, as described above, the electronic apparatus 10 is started up in a state of the power saving mode, similarly to the process in which shifting from the normal mode to the power saving mode is performed. Specifically, the control unit 20 executes the same process as the automatic power on process (steps S120, S250, ...) when detecting an insertion of the plug into the outlet, and performs shifting (step S130) to the second power saving mode thereafter.

However, when the same process as the automatic power on process is executed when detecting the insertion of the plug in this manner, whether or not to shift to the second power saving mode (step S130) thereafter is determined based on whether or not setting of the power saving mode is validated in advance. That is, when the same process as the automatic power on process is performed when detecting the insertion of the plug, the control unit 20 determines whether or not information denoting that the setting of the power saving mode is valid is stored in the storage unit 30 at a timing before and after the initialization (step S260) (for example, timing of step S270), and when the information is stored, the process proceeds to step S130 after the initialization, and shifting to the second power saving mode is performed (startup in second power saving mode). On the other hand, when information denoting that the setting of the power saving mode is invalid is stored in the storage unit 30, the process does not proceed to step S130, and startup in the normal mode is performed. That is, according to the embodiment, information denoting that the setting of the power saving mode which is stored in the storage unit 30 is valid can also be considered as one piece of the power saving information by an operation of a user. In this manner, according to the embodiment, it is possible to cause the electronic apparatus 10 to automatically shift to the second power saving mode, even when the electronic apparatus 10 is caused to be restored from a power failure.

The foregoing description has been given by way of example only and it will be appreciated by a person skilled in the art that modifications can be made without departing from the scope of the present invention.

The entire disclosure of Japanese Patent Application No.2014-161650, filed August 7, 2014 is expressly incorporated by reference herein.

## Claims

1. An electronic system which has a normal mode, and a power saving mode in which power consumption is smaller than that of the normal mode as operation states, the electronic system comprising:
a control unit; and
a storage unit,
wherein, when shifting from the normal mode to the power saving mode, the control unit starts up the electronic system after turning off power of the electronic system, after causing the storage unit to store power saving information which denotes shifting to the power saving mode, and
wherein the control unit determines whether or not the power saving information is stored in the storage unit when starting up the electronic system, causes the electronic system to shift to the power saving mode by starting up the electronic system when it is a first case in which the power saving information is stored in the storage unit, and causes the electronic system to shift to the normal mode by starting up the electronic system when it is a second case in which the power saving information is not stored in the storage unit.

2. The electronic system according to claim 1, further comprising:
a display unit for displaying information related to the electronic system,
wherein, in the power saving mode, a state of the display unit is the same as a state of the power off of the electronic system.

3. The electronic system according to claim 2,
wherein, when setting in which shifting from the normal mode to the power saving mode is not allowed is performed, or when setting in which shifting from the normal mode to the power saving mode is allowed is performed, and a predetermined error occurs in the electronic system, the control unit does not cause the electronic system to start up after turning off power of the electronic system.

4. The electronic system according to claim 1,
wherein the control unit shifts to an error notifying mode for notifying an error which is different from either the normal mode or the power saving mode by starting up the electronic system at a time of starting up the electronic system, when the power saving information is stored in the storage unit, and the predetermined error occurs in the electronic system.

5. A control method of an electronic system which has a normal mode, and a power saving mode in which power consumption is smaller than that of the normal mode as operation states, the method comprising:
starting up the electronic system after turning off power of the electronic system, after causing a predetermined storage unit to store power saving information which denotes shifting to the power saving mode, when shifting from the normal mode to the power saving mode;
determining whether or not the power saving information is stored in the storage unit when starting up the electronic system;
causing the electronic system to shift to the power saving mode by starting up the electronic system when it is a first case in which the power saving information is stored in the storage unit; and
causing the electronic system to shift to the normal mode by starting up the electronic system when it is a second case in which the power saving information is not stored in the storage unit.
